# EUROPEAN PATENT SPECIFICATION

(11) **EP 4 448 418 B1**
(45) Date of publication and mention of the grant of the patent: **11.11.2026**
(21) Application number: 22830798.9
(22) Date of filing: 07.12.2022
(51) Int. Cl.: B65G 1/04, F24F 9/00, F25D 13/00, F25D 17/00, F25D 17/06, H05K 7/20

(54) **AUTOMATED STORAGE AND RETRIEVAL SYSTEM AND METHOD FOR THERMALLY MANAGING AIR IN AN AUTOMATED STORAGE AND RETRIEVAL SYSTEM**
AUTOMATISIERTES REGALBEDIENUNGSSYSTEM UND VERFAHREN ZUR WÄRMEVERWALTUNG VON LUFT IN EINEM AUTOMATISIERTEN REGALBEDIENUNGSSYSTEM
SYSTÈME DE STOCKAGE ET DE RÉCUPÉRATION AUTOMATISÉ ET PROCÉDÉ DE GESTION THERMIQUE D'AIR DANS UN SYSTÈME DE STOCKAGE ET DE RÉCUPÉRATION AUTOMATISÉ

(30) Priority: 15.12.2021 NO 20211511; 10.05.2022 NO 20220557
(43) Date of publication of application: 23.10.2024
(73) Proprietor: AutoStore Technology AS, 5578 Nedre Vats (NO)
(72) Inventor: BERSAAS, Paul Edvin, 5533 HAUGESUND (NO); VERPE, Espen, 5522 HAUGESUND (NO)
(74) Representative: Kilburn & Strode LLP
(86) International application number: PCT/EP2022/084712
(87) International publication number: WO 2023/110561

(56) References cited:
- WO-A1-00/75041
- WO-A1-2017/194608
- WO-A1-2021/198170
- WO-A1-91/01094
- WO-A1-99/36736
- JP-A- S5 966 836
- US-A- 3 543 532

## Description

The present invention relates primarily to an automated grid-based storage and retrieval system.

### BACKGROUND AND PRIOR ART

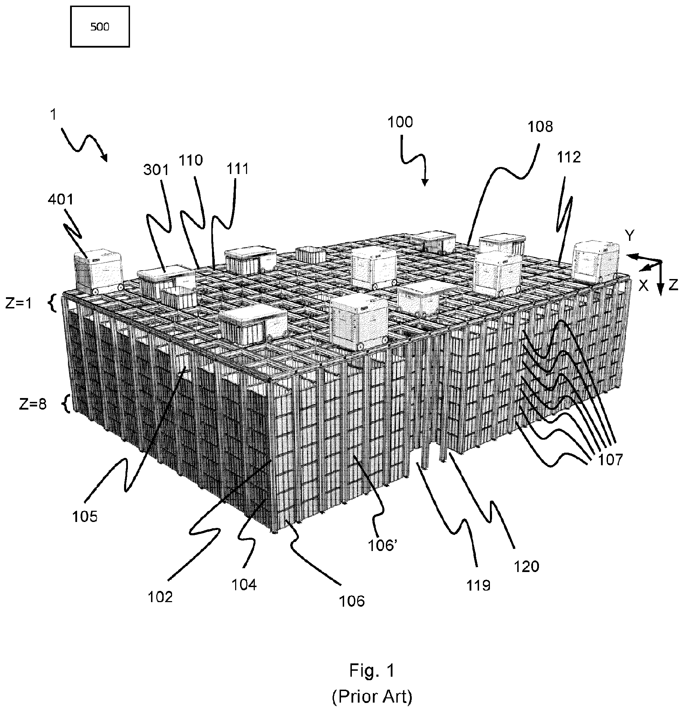

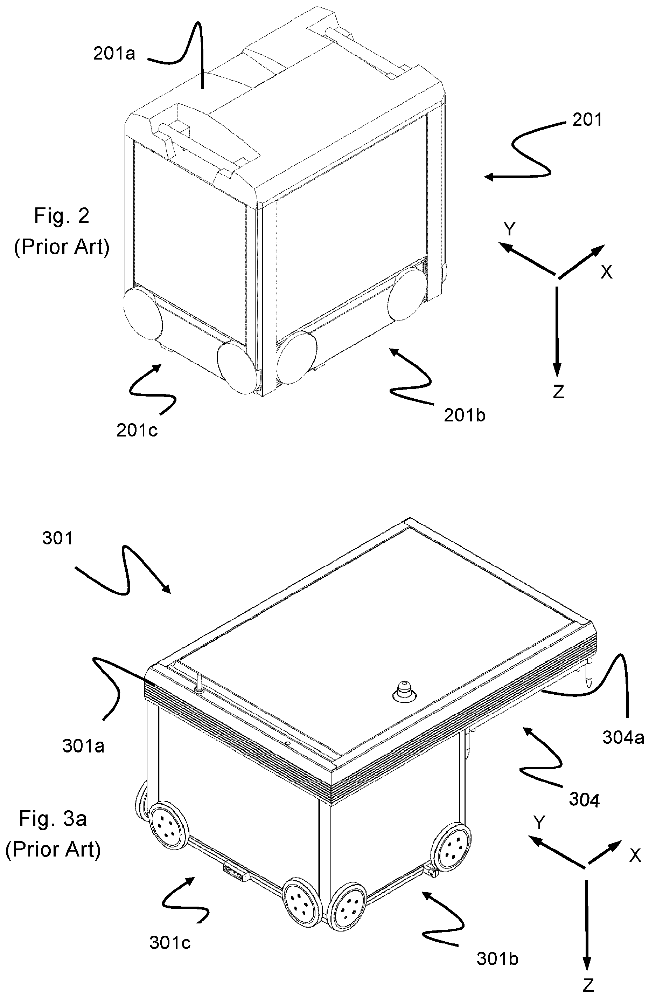

Fig. 1 discloses a prior art automated storage and retrieval system 1 with a framework structure 100 and Figs. 2, 3a-3b disclose three different prior art container handling vehicles 201, 301, 401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form container stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 301, 401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 301, 401 in a first direction X across the top of the frame structure 100, and a second set of parallel rails 111 arranged perpendicular to the first set of rails 110 to guide movement of the container handling vehicles 301, 401 in a second direction *Y* which is perpendicular to the first direction *X.* Containers 106 stored in the columns 105 are accessed by the container handling vehicles 301, 401 through access openings 112 in the rail system 108. The container handling vehicles 301, 401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supportive.

Each prior art container handling vehicle 201, 301, 401 comprises a vehicle body 201a, 301a, 401a and first and second sets of wheels 201b, 201c, 301b, 301c, 401b, 401c which enable lateral movement of the container handling vehicles 201, 301, 401 in the *X* direction and in the *Y* direction, respectively. In Figs. 2-3b, two wheels in each set are fully visible. The first set of wheels 201b, 301b, 401b is arranged to engage with two adjacent rails of the first set 110 of rails, and the second set of wheels 201c, 301c, 401c is arranged to engage with two adjacent rails of the second set 111 of rails. At least one of the sets of wheels 201b, 201c, 301b, 301c, 401b, 401c can be lifted and lowered, so that the first set of wheels 201b, 301b, 401b and/or the second set of wheels 201c, 301c, 401c can be engaged with the respective set of rails 110, 111 at any one time.

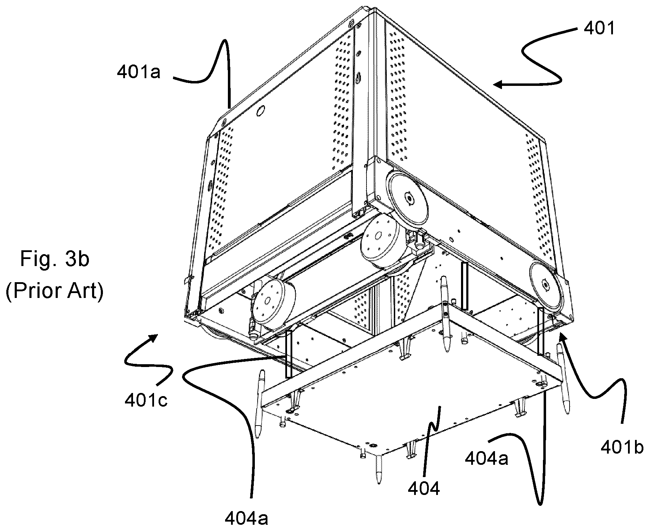

Each prior art container handling vehicle 201, 301, 401 also comprises a lifting device 304, 404 (visible in Figs. 3a-3b) having a lifting frame part 304a for vertical transportation of storage containers 106, e.g. raising a storage container 106 from, and lowering a storage container 106 into, a storage column 105. Lifting bands 404a are also shown in Fig. 3b. The lifting device 304, 404 comprises one or more gripping/engaging devices which are adapted to engage a storage container 106, and which gripping/engaging devices can be lowered from the vehicle 201, 301, 401 so that the position of the gripping/engaging devices with respect to the vehicle 201, 301, 401 can be adjusted in a third direction *Z* (visible for instance in Fig. 1) which is orthogonal the first direction *X* and the second direction *Y.* Parts of the gripping device of the container handling vehicles 301, 401 are shown in Figs. 3a and 3b indicated with reference numbers 304 and 404. The gripping device of the container handling device 201 is located within the vehicle body 201a in Fig. 2.

Conventionally, and also for the purpose of this application, *Z*=1 identifies the uppermost layer available for storage containers below the rails 110, 111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1...*n* and *Y*=1... *n* identifies the position of each storage column 105 in the horizontal plane. Consequently, as an example, and using the Cartesian coordinate system *X, Y, Z* indicated in Fig. 1, the storage container identified as 106' in Fig. 1 can be said to occupy storage position *X=18, Y=1, Z=6.* The container handling vehicles 201, 301, 401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0*.*

The storage volume of the framework structure 100 has often been referred to as a grid 104, where the possible storage positions within this grid are referred to as storage cells within storage columns. Each storage column may be identified by a position in an X- and Y-direction, while each storage cell may be identified by a container number in the X-, Y- and Z-direction.

Each prior art container handling vehicle 201, 301, 401 comprises a storage compartment or space for receiving and stowing a storage container 106 when transporting the storage container 106 across the rail system 108. The storage space may comprise a cavity arranged internally within the vehicle body 201a as shown in Figs. 2 and 3b and as described in e.g. WO2015/193278A1 and WO2019/206487A1.

Fig. 3a shows an alternative configuration of a container handling vehicle 301 with a cantilever construction. Such a vehicle is described in detail in e.g. NO317366.

The cavity container handling vehicles 201 shown in Fig. 2 may have a footprint that covers an area with dimensions in the X and Y directions which is generally equal to the lateral extent of a storage column 105, e.g. as is described in WO2015/193278A1. The term 'lateral' used herein may mean 'horizontal'.

Alternatively, the cavity container handling vehicles 401 may have a footprint which is larger than the lateral area defined by a storage column 105 as shown in Fig. 3b and as disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks; in other rail systems 108, each rail in one direction may comprise one track and each rail in the other perpendicular direction may comprise two tracks. The rail system may also comprise a double track rail in one of the X or Y direction and a single track rail in the other of the X or Y direction. A double track rail may comprise two rail members, each with a track, which are fastened together.

WO2018/146304A1 illustrates a typical configuration of rail system 108 comprising rails and parallel tracks in both *X* and *Y* directions.

In the framework structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201, 301, 401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or a dedicated column 105 within the framework structure 100, then picked up by any container handling vehicle and transported to a port column 119, 120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201, 301 can drop off storage containers 106 to be transported to an access or a transfer station, and the second port column 120 may be a dedicated pick-up port column where the container handling vehicles 201, 301, 401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are, once accessed, returned into the framework structure 100. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119, 120 and the access station.

If the port columns 119, 120 and the access station are located at different heights, the conveyor system may comprise a lift device with a vertical component for transporting the storage containers 106 vertically between the port column 119, 120 and the access station.

The conveyor system may be arranged to transfer storage containers 106 between different framework structures, e.g. as is described in WO2014/075937A1.

When a storage container 106 stored in one of the columns 105 disclosed in Fig. 1 is to be accessed, one of the container handling vehicles 201, 301, 401 is instructed to retrieve the target storage container 106 from its position and transport it to the drop-off port column 119. This operation involves moving the container handling vehicle 201, 301 to a location above the storage column 105 in which the target storage container 106 is positioned, retrieving the storage container 106 from the storage column 105 using the container handling vehicle's 201, 301, 401 lifting device (not shown in Fig. 2 but visible in Figs. 3a and 3b), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201, 301, 401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201, 301, 401 is instructed to pick up the storage container 106 from the pick-up port column 120 and transport it to a location above the storage column 105 where it is to be stored. After storage containers 106 positioned at or above the target position within the stack 107 have been removed, the container handling vehicle 201, 301, 401 positions the storage container 106 at the desired position. The removed storage containers 106 may then be lowered back into the storage column 105 or relocated to other storage columns 105.

For monitoring and controlling the automated storage and retrieval system 1, e.g. monitoring and controlling the location of respective storage containers 106 within the framework structure 100, the content of each storage container 106 and the movement of the container handling vehicles 201, 301, 401 so that a desired storage container 106 can be delivered to the desired location at the desired time without the container handling vehicles 201, 301, 401 colliding with each other, the automated storage and retrieval system 1 comprises a control system 500 (shown in Fig. 1) which typically is computerized and which typically comprises a database for keeping track of the storage containers 106.

Storage and retrieval systems of the above kind could also be employed to store frozen goods, such as frozen food products. To this purpose, a temperature environment well below 0 °C is (273.15 K) required in a region of the system where frozen food products are stored. At the same time, a region of the storage and retrieval system above the rails, where container handling vehicles move, needs to be kept at a significantly higher temperature in order to safeguard the vehicles, in particular the vehicles' wheels. More specifically, ice build-up on the rails would eventually result wheel slippage. Accordingly, a multitemperature environment needs to be provided within the storage and retrieval systems. A storage and retrieval system featuring such an environment is discussed in WO2021/209648A1.

With reference to the system of WO2021/209648A1, it is desirable to provide a storage and retrieval system which offers further benefits to a system owner.

JP S59 66836 A describes air-permeable packaging boxes 2 containing a given amount of astringent persimmons are contained in a closed chamber 1, and the tops of the packaging boxes 2 are covered with a shielding sheet 20 by operating a winding machine 21. A fan 9 in a circulating path 6 is operated to feed air containing an alcoholic component and CO2 from a feed port 7 to the interior of the closed chamber 1, and the main air stream (A) is divided into an secondary air streams (B) in the perpendicular direction by the shielding sheet 20, a rectifying means 16 and the sucking action of a air discharge duct 15. The air streams (B) are sucked through the air discharge duct 15 while in uniform contact with the astringent persimmons in the packaging boxes 2, and then passed through the circulating path 6 to increase the CO2 content. The air is then refed from the feed port 7 into the closed chamber 1.

WO 00/75041 A1 describes containers which can be placed within a shipping container. At least one wall (20, 21, 22, 23) of the container has ducts (32, 33) through which cooling (or heated) gas may pass.

WO 91/01094 A1 describes a chamber (1) and a method for subjecting produce such as bananas to a controlled atmosphere is disclosed. The chamber (1) has an end wall (3) and produce is loaded into the chamber in two rows. A lower tier stack (21) of produce rests on the floor of the chamber (1) whilst an upper tier stack (23) is supported above the lower tier stack (21) by frame means (15). An atmosphere circulating space (27) is provided at each side of the chamber (1) between the stacks (21, 23), and the spacing of the rows provides an upper interstitial volume (31) and a lower interstitial volume (29). Sealing means (33) seals the upper and lower interstitial volumes (29 and 31) from each other whilst further sealing means (35) in the form of two blinds seals the upper and lower interstitial volumes from the atmospheric circulating space (27). A controlled atmosphere is caused to flow across the produce from the atmosphere circulating space (27) into the interstitial volumes (29 and 31) or in the reverse direction.

WO 2021/198170 A1 describes An automated storage and retrieval system for storing specialized goods in storage containers (106) in an isolating housing (800), having walls and a roof. Openable and closable hatches (804) are arranged in the roof. A rail system is arranged above the roof, upon which rail system may travel container handling vehicles (301), which may be positioned with its lifting device positioned above a hatch. A storage tower (400) is arranged inside the isolating housing, the storage tower being accessible to a container handling vehicle though the hatch. The storage tower has a number of vertically stacked, horizontally movable container supports (402) in the form of shelves upon which may rest a plurality of storage containers and one or more openings (403) corresponding in size to a storage container such that storage containers may pass therethrough. The container supports may align their openings to form a tower port beneath a hatch, through which the container handling vehicle may lower its lifting device though the hatch, down the tower port, and access the target container.

Further relevant prior art is disclosed in documents US3543532A, WO2017/194608A1 and WO99/36736A1.

### SUMMARY OF THE INVENTION

The present invention is set forth and characterized in the independent claims, while the dependent claims describe other embodiments of the invention.

First aspect of the invention relates to an automated, grid-based storage and retrieval system according to claim 1.

Controlled and continuous air release into the first air release volume through the perforations provided in the body of the air flow control device results in creation of a first transversal air curtain. When the air exits the single air duct and passes through said perforations it becomes thermally stratified. Accordingly, a plurality of transversally extending, well defined air bands having different temperatures is achieved within the first air curtain. By establishing said first transversal air curtain of thermally stratified air, a sharp, transversally extending thermal boundary is created in the storage and retrieval system. More precisely, the air curtain extends vertically between warmer temperatures at the level of the rail system and lower temperatures of the storage volume. Said air curtain creates a thermal boundary provided between the storage volume containing goods holders and the horizontal rails supporting wheels of the remotely operated vehicles such that the vehicles are not exposed to the prohibitively low temperatures, which might be as much as -25°C (248.15 K) below those of the storage volume. This is achieved without increasing structural complexity of the system, e.g., the storage volume and the region containing horizontal rails and the vehicles do not need to be physically separated.

The above discussed air curtain is highly efficient at separating cold air from warmer air. In other words, the cold air of the storage volume is prevented from mixing with warmer air higher up in the system. This entails significant energy savings as only limited amounts of very cold air, destined for the storage volume, need to be introduced into the system in order to compensate for negative effects of inadvertent mixing of cold and warm air.

Moreover, by arranging the air flow control device at the orifice of the air duct, ice build-up on the device is easily detected and removed.

Another aspect of the invention relates to a method for thermally managing air in an automated, grid-based storage and retrieval system in accordance with claim 9. For the sake of brevity, advantages discussed above are also associated with the corresponding method and are not further discussed.

For the purposes of this application, the term "container handling vehicle" used in "Background and Prior Art"-section of the application and the term "remotely operated vehicle" used in "Detailed Description of the Invention"-section both define a robotic wheeled vehicle operating on a rail system arranged across the top of the framework structure being part of an automated storage and retrieval system. Analogously, the term "storage container" used in "Background and Prior Art"-section of the application and the term "goods holder" used in "Detailed Description of the Invention"-section both define a receptacle for storing items. In this context, the goods holder can be a bin, a tote, a pallet, a tray or similar. Different types of goods holders may be used in the same automated storage and retrieval system.

The relative terms "upper", "lower", "below", "above", "higher" etc. shall be understood in their normal sense and as seen in a Cartesian coordinate system. When mentioned in relation to a rail system, "upper" or "above" shall be understood as a position closer to the surface rail system (relative to another component), contrary to the terms "lower" or "below" which shall be understood as a position further away from the rail system (relative another component).

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle/ remotely operated vehicle having a centrally arranged cavity for carrying storage containers therein.
Fig. 3a is a perspective view of a prior art container handling vehicle/ remotely operated vehicle having a cantilever for carrying storage containers underneath.
Fig. 3b is a perspective view, seen from below, of a prior art container handling vehicle/remotely operated vehicle having an internally arranged cavity for carrying storage containers therein.
Fig. 4 is a schematic view of an automated storage and retrieval system according to an embodiment of the present invention.
Fig. 5 is a perspective side view an automated storage and retrieval system according to an embodiment of the present invention.
Fig. 6a is a perspective side view of an air flow control device in accordance with one embodiment of the present invention.
Fig. 6b is a front view of the air flow control device shown in Fig. 6a.
Fig. 7a shows a sectional side view of a portion of the air flow control device shown in Figs. 6a-6b in accordance with a first embodiment of the present invention.
Fig. 7b shows a sectional side view of a portion of the air flow control device shown in Figs. 6a-6b in accordance with a second embodiment of the present invention.

### DETAILED DESCRIPTION OF THE INVENTION

In the following, embodiments of the invention will be discussed in more detail with reference to the appended drawings. It should be understood, however, that the drawings are not intended to limit the invention to the subject-matter depicted in the drawings.

The framework structure 100 of the automated storage and retrieval system 1 is constructed in accordance with the prior art framework structure 100 described above in connection with Figs. 1-3b, i.e. a number of upright members 102, wherein the framework structure 100 also comprises a first, upper rail system 108 in the X direction and Y direction.

The framework structure 100 further comprises storage compartments in the form of storage columns 105 provided between the members 102 where storage containers 106 are stackable in stacks 107 within the storage columns 105.

The framework structure 100 can be of any size. In particular, it is understood that the framework structure can be considerably wider and/or longer and/or deeper than disclosed in Fig. 1. For example, the framework structure 100 may have a horizontal extent of more than 700x700 columns and a storage depth of more than twelve containers.

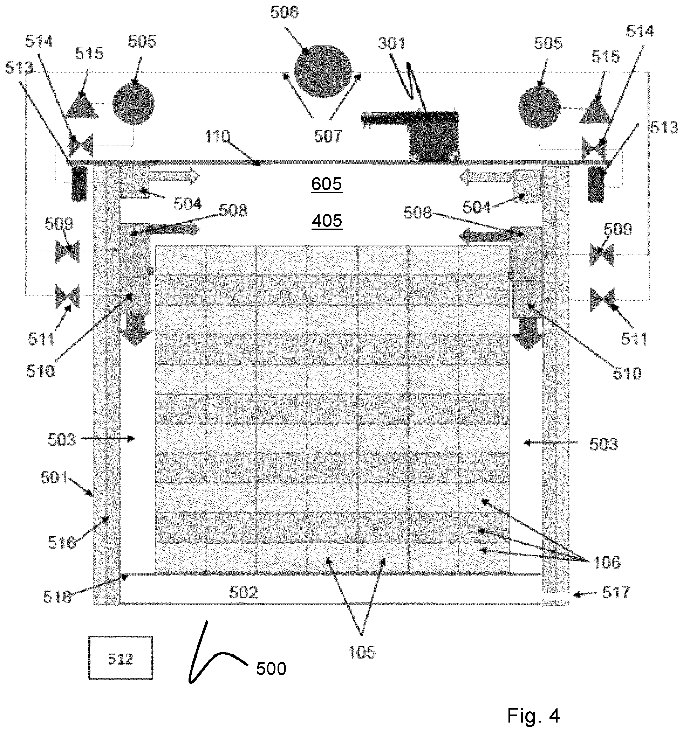

Various aspects of the present invention will now be discussed in more detail with reference to Figs. 4-7b.

Fig. 4 is a schematic view of an automated storage and retrieval system according to an embodiment of the present invention comprising a previously-described framework structure (100 in Fig. 1) defining at least one storage volume 500 arranged below the horizontal rails 110**.** Storage containers 106 are stacked on top of each other within storage columns 105. The system comprises a plurality of outer walls 501 to separate the storage volume 500 from external conditions, such as temperature and/or humidity. The surrounding outer walls 501 are provided with a channel extending from below the horizontal rails 110 to a first plenum 502 extending horizontally beneath the storage columns. The storage volume 500 is open against the horizontal rails 110 such that remotely operated vehicles 301 may lower and raise storage containers 106 into and out of the storage volume 500. As also shown in Fig. 4, there is a second plenum 503 extending between the outermost storage columns 105 and the outer walls 501.

The automated storage and retrieval system further comprises a second plurality of transversally directing air ducts 504 connected to an at least one fan 505 adapted to suction air from outside of the storage volume 500. The second plurality of transversally directing air ducts 504 is being positioned to distribute the air transversally below the horizontal rails 110. This creates a sharp, non-physical boundary - an upper transversal air curtain, between temperature zones such that neither the remotely operated vehicles 301 nor the horizontal rails 110 are exposed to the environment below. A controller 512 determines the speed of the at least one fan 505 such that the upper transversal air curtain keeps the horizontal rails 110 and the container handling vehicles 301 at a suitable temperature.

In some embodiments, the temperature of the air being drawn from outside the storage volume may be in the range -2°C to +10°C (271.15 K or 283.15 K) or higher. Such an outside temperature would typically be expected when a part of the full automated storage and retrieval system is positioned within a chilled temperature environment or the system is constructed in a location where ambient air temperatures correspond to such temperatures.

The temperature of the air being drawn from outside the storage volume may in some circumstances be too cold to hit the horizontal rails as cold air may cause unwanted condensation on the horizontal rails. For this purpose, the system comprises a heating element 513 to heat up the prohibitively cold air drawn from outside the storage volume before distributing the heated air transversally below the horizontal rails 110. The temperature of the heating element 513 may be controlled by means of a temperature gauge positioned between the heating element 513 and the second plurality of transversally directing air ducts 504.

The automated storage and retrieval system comprises a cooling system 506 adapted to draw air from the first plenum 502, subsequently cool said air and blow cooled air from an output 507 of the cooling system 506 as a cooled airflow. The air may be drawn from the first plenum 502 through an opening 517 between the first plenum 502 and a cooling enclosure comprising the cooling system 506. The cooling enclosure may be arranged inside or outside the outer walls 501. The system comprises a first plurality of transversally directing air ducts 508 adapted to receive the cooled airflow from the cooling system 506 via a first air damper 509. The first plurality of transversal air ducts 508 is adapted to distribute a first portion of the cooled airflow transversally above an uppermost layer of the storage columns 105. This creates a lower transversal air curtain of cooled air, between the upper transversal air curtain, and the storage columns 105.

The cooling system 506 may in one embodiment comprise a chiller to cool the air, and a fan to draw the air from the first plenum 502. The chiller may be for example be an evaporator or a heat exchanger. The chiller may be connected to an evaporator or heat exchanger external to the storage volume 500 to dump heat outside the storage volume 500. However, any suitable cooling system may be used. The first air damper 509 may be in direct connection with the output 507 of the cooling system 506, e.g. via a conduit connecting the first air damper 509 to the output 507. In an alternative embodiment, the output 507 of the cooling system 506 may blow the cooled airflow into the cooling enclosure, and the cooled airflow is provided to the first air damper 509 by a fan drawing the cooled airflow from the cooling enclosure.

When air is drawn from the first plenum 502 through the cooling system 506 an underpressure, or vacuum, is created in the first plenum 502. The magnitude of the underpressure in the void 502 is controlled by a force drawing air into the cooler system 506 and the first portion of the cooled airflow distributed transversally above the uppermost layer of the storage columns 105 by the transversally directing air ducts 508. An overpressure is created above the of the storage columns 105 by the same first plurality of transversally directing air ducts 508. The pressure differential between the overpressure over the storage columns 105 and the underpressure in the first plenum 502, determines the speed of air through the plurality of storage columns 105. A higher pressure differential increases the speed of air and increases the cooling effect of the cooled airflow passing through the plurality of storage columns 105. A lower pressure differential reduces the speed of air and reduces the cooling effect of the cooled airflow passing through the plurality of storage columns 105. The cooled airflow through the first plurality of transversally directing air ducts 508 is determined by the first air damper 509.

For the cooling system 506 to be controlled separately from the cooled airflow passing through the plurality of storage columns 105, the at least one storage volume 500 further comprises a plurality of vertically directing air ducts 510 connected to the output 507 of the cooling system 506 through a second air damper 511. The plurality of vertically directing air ducts 510 are adapted to distribute a second portion of the cooled airflow downwards into the second plenum 503. The first air damper 509 and the second air damper 511 then help to balance the load of the cold airflow across the storage columns 105 and down the sides to provide a relatively constant load for the cooling system 506. The controller 512 is adapted to adjust the first air damper 509 and the second air damper 511 to control the relative distribution of the first portion of the cooled airflow and the second portion of the cooled airflow.

The system may comprise a third air damper 514 arranged between the at least one fan 505 and the second plurality of transversally directed air ducts 504. The third air damper 514 may comprise a pressure sensor. The controller 512 may then be adapted to control the speed of the at least one fan 505 based on a predetermined pressure level. In one embodiment, a frequency converter 515 may control the speed of the at least one fan 505 based on a pressure measured by the pressure sensor, e.g. by outputting a control voltage to the at least one fan 505 corresponding to the measured pressure.

The storage volume 500 may comprise at least one temperature sensor, and the controller 112 may be adapted to adjust airflow based on a temperature measured by the at least one temperature sensor.

The system may comprise a raised floor 518 with a plurality of ventilation holes provided between the first plenum 502 and the plurality of storage columns 105. The raised floor 518 may also extend to the outer walls 501, such that the raised floor 518 is provided between the second plenum 503 and the first plenum 502. A total area of each of the plurality of ventilation holes may be configured to increase with the horizontal distance of each of the ventilation holes from the air intake in the first plenum 502. The total area of each of the plurality of ventilation holes may be varied by the number and/or size of ventilation holes. Small and/or few ventilation holes close to the air intake and larger and/or more ventilation holes further away from the air intake will create a more uniform airflow and more uniform cooling within the storage volume. The total area of each of the plurality of ventilation holes may be adjustable, e.g. using an aperture plate over another aperture plate where the two aperture plates are moved relative to each other. The plurality of ventilation holes may be provided by a plurality of perforations in panels forming the raised floor.

In one embodiment, the outer walls 501 each comprise a layer of thermal insulating material 516. A thermal insulating material is a material that has a lower thermal conductivity than general purpose construction materials, such as aluminium, acrylic glass, plywood, plaster and timber. Thermal insulating materials typically have a thermal conductivity below 0.06 Wm⁻¹K⁻¹. Exemplary thermal insulating material includes, but are not limited to, glass wool, rock wool, cellulose, polystyrene foam, urethane foam, vermiculite, perlite and cork. The outer wall may be made of a thermal insulating material, the wall may be covered by an insulating material, or the thermal insulating material may be part of a sandwich wall construction. Outer walls 501 with a layer of thermal insulating material 516 are particularly useful when the difference in storage volume temperatures between two neighboring storage volumes is too high to control by airflow only.

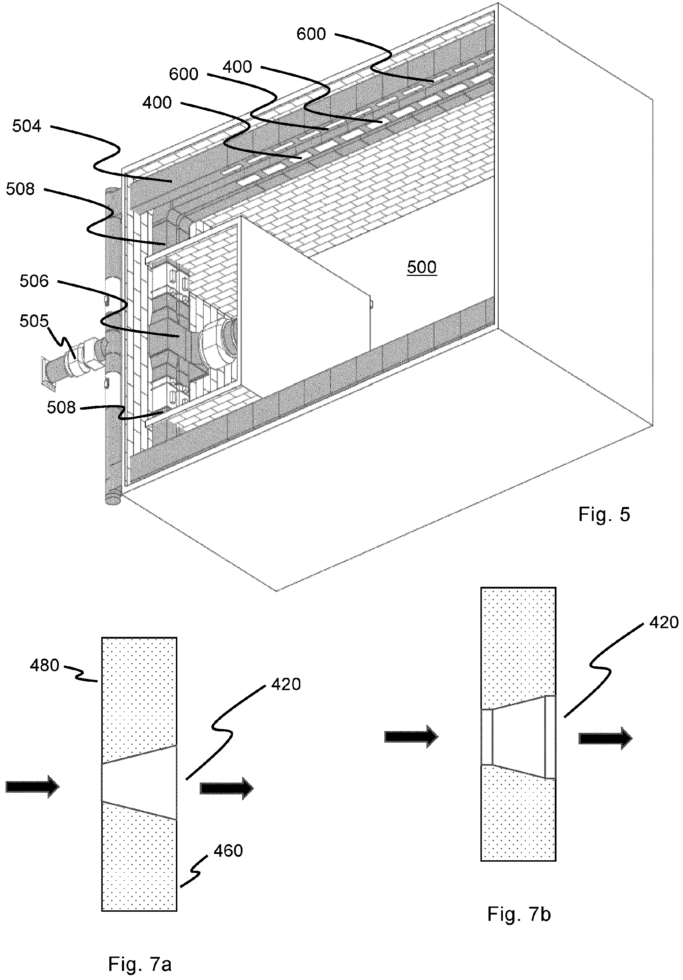

Fig. 5 is a perspective side view of a system according to an embodiment of the present invention. Shown automated storage and retrieval system is structurally similar to the schematically shown system of Fig. 4. Accordingly, in addition to ducts and air flow control devices visible in Fig. 5, there is a substantially similar arrangement of ducts and air flow control devices arranged oppositely these. In Fig. 5, the storage grid with its parts, such as framework structure and horizontal rails, of Fig. 4 has been left out. With reference to Figs. 4-5, a storage volume 500 for storing goods holders 106 is provided. A first air release volume 405 (visible in Fig. 4) is disposed below the horizontal rails (110 in Fig. 4) and above the storage volume 500. A first transversally directing air duct 508 is positioned to distribute air transversally into the first air release volume 405. As previously discussed, a cooling system 506 comprising a chiller that cools the air is provided. Said chiller supplies cooled air into the air duct 508. The chiller may be for example be an evaporator or a heat exchanger.

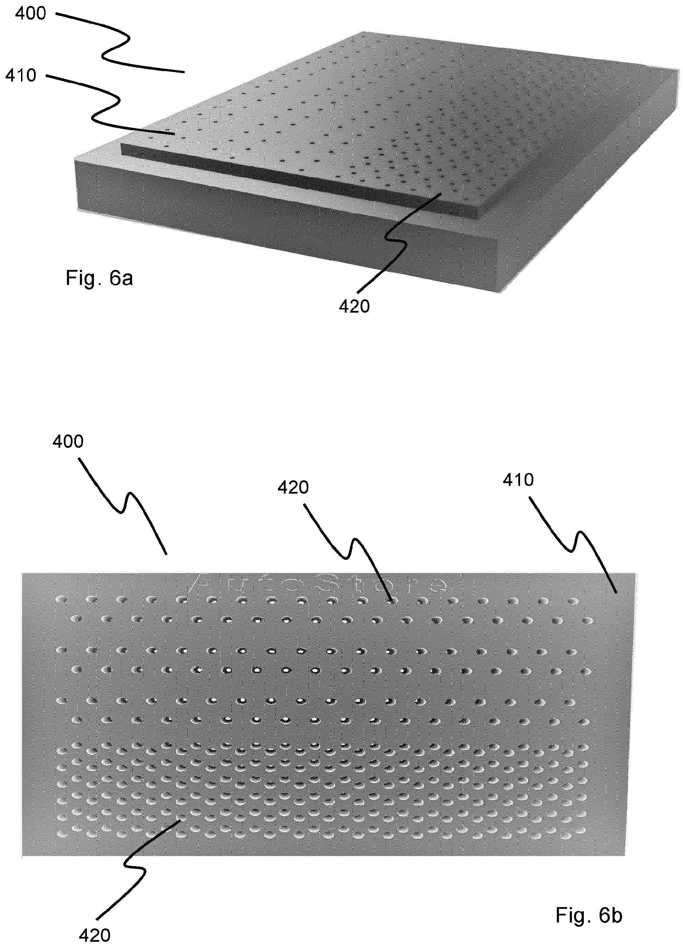

An array of air flow control devices 400, each comprising a body provided with a plurality of perforations, is arranged at a respective orifice of the first transversally directing air duct 508. The air is distributed transversally into the first air release volume (405; visible in Fig. 4) such that with the air flow control device 400 in position the air duct 508 can produce a first transversal air curtain downstream of the air flow control device 400 in the first air release volume 405. Temperature of the air of the first transversal air curtain is stratified. Structural and functional details of the air flow control device 400 are discussed in connection with Figs. 6a-6b and 7a-7b. Amount of air to be introduced into said first air release volume, via the device 400, is controlled by the first air damper 509 shown in Fig. 4

Controlled and continuous air release into the first air release volume 405 through the perforations provided in the body of the air flow control device 400 results in creation of a first transversal air curtain. In particular, when the air exits the first air duct 508 and passes through said perforations it becomes thermally stratified. Accordingly, a plurality of transversally extending, well defined air bands having different temperatures is achieved within the first air curtain. Temperature of the individual air bands decreases in the downward direction of the automated, grid-based storage and retrieval system, i.e. towards the storage volume. By establishing said first transversal air curtain of thermally stratified air, a sharp, transversally extending thermal boundary is created in the storage and retrieval system. More precisely and with particular reference to Fig. 4, the air curtain extends vertically between warmer temperatures at the level of the rail system 110 and lower temperatures of the storage volume 500. Said air curtain creates a thermal boundary provided between the storage volume 500 containing goods holders 106 and the horizontal rails 110 supporting wheels of the remotely operated vehicles 301 such that the vehicles are not exposed to the prohibitively low temperatures. This is achieved without increasing structural complexity of the system, e.g., the storage volume and the region containing horizontal rails and the vehicles do not need to be physically separated.

The above discussed air curtain is highly efficient at separating cold air from warmer air. In other words, the cold air of the storage volume 500 is prevented from mixing with warmer air higher up in the system. This entails significant energy savings as only limited amounts of very cold air, destined for the storage volume 500, need to be introduced into the system in order to compensate for negative effects of inadvertent mixing of cold and warm air. In order to keep mixing of cold and warm air at a minimum, air velocity in the transversal direction at interface of two air curtains/two different temperature zones needs to be relatively low. At said interface, air propagates preferably in a substantially horizontal direction.

Still with reference to Figs. 4-5, air velocity in the temperature-stratified air bands of the first transversal air curtain increases in the downward direction of the automated, grid-based storage and retrieval system. Moreover, in at least one band of the first transversal air curtain, velocity of the air increases in the transversal direction of the automated, grid-based storage and retrieval system.

The system shown in Figs. 4-5 further comprises a second air release volume 605 (visible in Fig. 4) disposed below the horizontal rails (110 in Fig. 4) and above the cooling air release volume 405. A second transversally directing air duct 504 is positioned to distribute incoming air transversally into the second air release volume 605. As described in connection with Fig. 4, an air suction device 505, such as a fan, draws air from outside of the storage volume 500 and supplies it to the air duct 504.

An array of second air flow control devices 600, each comprising a body provided with a plurality of perforations, is arranged at a respective orifice of the second transversally directing air duct 504. Amount of air to be introduced into said second air release volume 605, via the device 600, is controlled by the second air damper 511 shown in Fig. 4. The air is distributed transversally into the second air release volume 605 such that the air duct 504 can produce a second transversal air curtain downstream of the second air flow control device 600 in the second air release volume 605. Temperature of the air of the second transversal air curtain is uniform, i.e. non-stratified. In one embodiment, air arriving from the duct 504 is directed slightly upwards by the air flow control device 600 only in an upper region of the second transversal air curtain, i.e. this air flow portion is directed towards guide rails

Typically, the air of the first transversal air curtain and the air of the second transversal air curtain flow in the same direction. The temperatures of the air of the first transversal air curtain are below 0 °C (273.15 K), ranging approximately between 0 and - 30 °C (273.15 K - 243.15 K) and the temperature of the air of the second transversal air curtain is above 0 °C (273.15 K), preferably between 5-10 °C (278.15 K - 283.15 K). There is a transversally extending zone positioned between the first transversal air curtain and the second transversal air curtain. At least a section of said zone has an air band having a temperature of 0 °C (273.15 K). In the shown embodiments, vertical height of the first and second air curtains is about 50 cm. In this context, it is desirable to bring this vertical height to a minimum without degrading its advantageous properties.

In an alternative embodiment (not shown) to the one shown in Fig. 4, featuring vertically directing air ducts 510 and the second plenum 503, cooling air (having temperature of about - 30 °C (243.15 K)), is, via a transversally directing air duct and an air flow control device, introduced in a dedicated air release volume positioned below first transversal air curtain. This way of introducing air is analogous to the one described in connection with air control device 400 of Fig. 5. Here and in order to keep mixing of colder and warmer air at a minimum, air velocity in the transversal direction at interface of these different temperature zones needs to be relatively low. At said interface, air propagates preferably in a substantially horizontal direction. Advantageously, it is hereby created a predefined pressure drop over each air flow control device so that carefully controlled amounts of cooling air may be introduced into the storage grid. Hereby, temperature in the storage grid is kept stable and energy consumption is kept at a minimum.

Fig. 6a is a perspective view of a back side of an air flow control device 400 in accordance with one embodiment of the present invention.

The air flow control device 400 of Fig. 6 is for controlling air flow in an automated, grid-based storage and retrieval system for storing goods holders. An exemplary system is shown in Fig. 1. The air flow control device 400 comprises a body 410 provided with a plurality of perforations 420 through which air can be directed. As discussed in connection with Figs. 4-5, said device 400 is arranged at an orifice of a transversally directing air duct positioned to distribute the air transversally into a first air release volume such that with the air flow control device in position the air duct can produce a first transversal air curtain downstream of the air flow control device in said first air release volume 405 so that temperature of the air of the first transversal air curtain becomes stratified

By arranging the air flow control device 400 at the orifice of the air duct, ice build-up on the device is easily detected and removed, for instance by means of a dedicated heater (not shown).

Still with reference to Fig. 6a, the air flow control device 400 is for fitting to an air duct having a rectangular cross-section. Preferably, the body 410 of the air flow control device 400 is plate-shaped.

As discussed above, the air flow control device 400 is preferably made in a thermally-insulating polymer material, for instance in PVC, having a thermal conductivity below 0,06 W/mK. Alternatively, the air flow control device 400 may be cast in XPS (extruded polystyrene) having a suitable density.

The air flow control device 400 is devoid of moving parts. Hereby, a robust device is created, the maintenance of which device being greatly facilitated.

In one embodiment, the air flow control device 400 comprises an airflow straightener (not shown) arranged immediately upstream of the air flow control device, when said device is arranged at the orifice of the air duct. In one embodiment, said airflow straightener is structurally integrated with the air flow control device.

Fig. 6b is a view of a front side of the air flow control device 400 shown in Fig. 6a. As shown, a row of perforations 420 is made up of a plurality of horizontally aligned perforations extending substantially from a first edge of the body 410 of the device 400 to a second, opposite edge of the body 410 of the device 400. All perforations of the row are uniform. As easily seen, a total cross-sectional area of the perforations 420 in a lower section of the body 410 of the device 400 is larger than a total cross-sectional area of the perforations 420 in an upper section of the body 410 of the device 400. On the more general level, the perforations in the lower section are configured to deliver a greater volume of cooling air in a unit time as compared to the perforations of the upper section.

Fig. 7a shows a sectional side view of a portion of the air flow control device 400 shown in Figs. 6a-6b in accordance with a first embodiment of the present invention. Direction of air flow is denoted with arrows.

In this embodiment, a vertical cross-section of one perforation 420 is circular-shaped. Furthermore, a first radius of the perforation 420 on a body side 460 facing the first air release volume is larger than a second radius of the perforation on a body side 480 facing away from the first air release volume. By way of example, diameter of the perforation 420 on the body side 460 facing the first air release volume is 8 mm whereas diameter of the body side 480 facing away from the first air release volume is 4 mm. The perforation 420 continuously tapers in a direction opposite the air flow direction. In further embodiments, the vertical cross-section of a perforation may adopt other shapes, such as square, rectangular, ellipsoid or triangular.

Fig. 7b shows a sectional side view of a portion of the air flow control device 420 shown in Figs. 6a-6b in accordance with a second embodiment of the present invention. Again, direction of air flow is denoted with arrows. Here, the perforation 420 comprises a first cylindrically-shaped end section associated with the first radius and a second cylindrically-shaped end section associated with the second radius and an intermediate section that continuously tapers in a direction opposite the air flow direction.

In the preceding description, various aspects of the air flow control device for controlling air flow in an automated, grid-based storage and retrieval system have been described with reference to the illustrative embodiment. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, are deemed to lie within the scope of the present invention, which is defined in the following claims.

### LIST OF REFERENCE NUMBERS

- 1: Storage and retrieval system
- 102: Upright members of framework structure
- 104: Storage grid
- 105: Storage column
- 106: Storage container/goods holder
- 106': Particular position of storage container
- 107: Stack of storage containers
- 108: Rail system
- 110: Parallel rails in first direction (X)
- 111: Parallel rails in second direction (Y)
- 112: Access opening
- 119: First port column
- 201: Container handling vehicle belonging to prior art
- 201a: Vehicle body of the container handling vehicle 201
- 201b: Drive means / wheel arrangement, first direction (X)
- 201c: Drive means / wheel arrangement, second direction (Y)
- 301: Cantilever-based container handling vehicle
- 301a: Vehicle body of the container handling vehicle 301
- 301b: Drive means in first direction (X)
- 301c: Drive means in second direction (Y)
- 400: Air flow control device
- 401: Container handling vehicle belonging to prior art
- 401a: Vehicle body of the container handling vehicle 401
- 401b: Drive means in first direction (*X*)
- X: First direction
- Y: Second direction
- Z: Third direction
- 405: First air release volume
- 410: Body of the air flow control device
- 420: Perforations
- 460: Body side facing the first air release volume
- 480: Body side facing away from the first air release volume
- 500: Storage volume
- 501: Outer wall
- 502: First plenum
- 503: Second plenum
- 504: 2nd transversal air ducts
- 505: Fan
- 506: Cooling system
- 507: Cooling system output
- 508: First transversal air duct
- 509: 1^{st} Air damper
- 510: Downwards air ducts
- 511: 2^{nd} Air damper
- 512: Controller
- 513: Heating element
- 514: 3^{rd} Air damper
- 515: Frequency converter
- 516: Insulation
- 517: Opening
- 518: Raised floor
- 600: Second air flow control device
- 605: Second air release volume

## Claims

1. An automated, grid-based storage and retrieval system (1), said system (1) comprising:
- a framework structure (100) comprising vertically extending members (102) and a grid of horizontal rails (110) provided at upper ends of said vertical members (102), wherein remotely operated vehicles (301) for handling goods holders (106) operate on top of the grid, the framework structure (100) defining:
- a storage volume (500) disposed below the horizontal rails (110) for storing goods holders (106), wherein air temperature at the horizontal rails is higher than air temperature in the storage volume,
- a first air release volume (405) disposed below the horizontal rails (110) and above the storage volume (400),
- a transversally directing air duct (508) positioned to distribute air transversally into the first air release volume (405),
- an air flow control device (400) comprising a body (410) provided with a plurality of perforations (420), said air flow control device (400) being configured to be arranged at an orifice of the transversally directing air duct (508) positioned to distribute the air transversally into the first air release volume (405) such that with the air flow control device (400) in position the air duct (508) can produce a first transversal air curtain downstream the air flow control device (400) in the first air release volume (405), wherein the temperature of the air of the first transversal air curtain is stratified.

2. An automated, grid-based storage and retrieval system (1) of claim 1, wherein temperature of the air of the first transversal air curtain decreases in the downward direction of the automated, grid-based storage and retrieval system (1).

3. An automated, grid-based storage and retrieval system (1) of any of the claims 1-2, wherein velocity of the air of the first transversal air curtain increases in the downward direction of the automated, grid-based storage and retrieval system (1).

4. An automated, grid-based storage and retrieval system (1) of any of the claims 1-3, wherein, in at least one band of the first transversal air curtain having stratified air temperature, velocity of the air increases in the transversal direction of the automated, grid-based storage and retrieval system (1).

5. An automated, grid-based storage and retrieval system (1) of any of the claims 1-4, said system (1) further comprising:
- a second air release volume (605) disposed below the horizontal rails (110) and above the first air release volume (405),
- a second transversally directing air duct (504) positioned to distribute incoming air transversally into the second air release volume (605),
- a second air flow control device (600) comprising a body provided with a plurality of perforations, said air flow control device (600) being configured to be arranged at an orifice of the second transversally directing air duct (504) positioned to distribute the air transversally into the second air release volume (605) such that with the second air flow control device in position the air duct (504) can produce a second transversal air curtain downstream the second air flow control device (600) in the second air release volume (605), wherein temperature of the air of the second transversal air curtain is uniform.

6. An automated, grid-based storage and retrieval system (1) of claim 5, wherein the air of the first transversal air curtain and the air of the second transversal air curtain flow in the same direction.

7. An automated, grid-based storage and retrieval system (1) of any of the claims 5-6, wherein the temperatures of the air of the first transversal air curtain are below 0 °C (273.15 K) and the temperature of the air of the second transversal air curtain is above 0 °C (273.15 K).

8. An automated, grid-based storage and retrieval system (1) of any of the claims 5-7, wherein at least a section of a zone positioned between the first transversal air curtain and the second transversal air curtain has a temperature of 0 °C (273.15 K).

9. A method for thermally managing air in an automated, grid-based storage and retrieval system (1) comprising a framework structure (100) with vertically extending members (102) and a grid of horizontal rails (110) provided at upper ends of said vertical members (102), wherein remotely operated vehicles (301) for handling goods holders (106) operate on top of the grid, the framework structure (100) defining:
- a storage volume (500) disposed below the horizontal rails (110) for storing goods holders (106), wherein air temperature at the horizontal rails is higher than air temperature in the storage volume, and
- a first air release volume (405) disposed below the horizontal rails (110) and above the storage volume (500),
the system (1) further comprising a transversally directing air duct (508) positioned to distribute air transversally into the first air release volume (405) such that a first transversal air curtain is provided in the first air release volume (405),
said method comprising:
- providing an air flow control device (400) comprising a body (410) provided with a plurality of perforations (420) at an orifice of said transversally directing air duct, and
- stratifying the temperature of the air of the first transversal air curtain by means of said air flow control device (400).

10. A method of claim 9 for thermally managing cooling air in an automated, grid-based storage and retrieval system (1) comprising a framework structure (100), the framework structure (100) defining:
- a second air release volume (605) disposed below the horizontal rails (110) and above the first air release volume (405),
- a second transversally directing air duct (504) positioned to distribute air transversally into the second air release volume (605),
said method comprising:
- providing a second transversal air curtain of uniform temperature in the second air release volume (605).

## Patentansprüche

1. Automatisiertes, gitterbasiertes Lager- und Entnahmesystem (1), das System (1) umfassend:
- eine Rahmenstruktur (100), umfassend sich vertikal erstreckende Elemente (102) und ein Gitter aus horizontalen Schienen (110), die an oberen Enden der vertikalen Elemente (102) bereitgestellt sind, wobei fernbediente Fahrzeuge (301) zum Handhaben von Warenträgern (106) auf dem Gitter betrieben werden, wobei die Rahmenstruktur (100) definiert:
- ein unterhalb der horizontalen Schienen (110) angeordnetes Lagervolumen (500) zur Lagerung von Warenträgern (106), wobei die Lufttemperatur an den horizontalen Schienen höher ist als die Lufttemperatur im Lagervolumen;
- ein erstes Luftabgabevolumen (405), das unterhalb der horizontalen Schienen (110) und oberhalb des Speichervolumens (400) angeordnet ist;
- einen transversal gerichteten Luftkanal (508), der so angeordnet ist, dass Luft transversal in das erste Luftabgabevolumen (405) verteilt wird,
- eine Luftstromsteuervorrichtung (400), umfassend einen Körper (410), der mit mehreren Perforationen (420) versehen ist, wobei die Luftstromsteuervorrichtung (400) dazu ausgelegt ist, an einer Öffnung des transversal gerichteten Luftkanals (508) angeordnet zu sein, die dazu positioniert ist, die Luft transversal in das erste Luftabgabevolumen (405) zu verteilen, sodass bei in Position befindlicher Luftstromsteuervorrichtung (400) der Luftkanal (508) einen ersten transversalen Luftvorhang stromabwärts der Luftstromsteuervorrichtung (400) in dem ersten Luftabgabevolumen (405) erzeugen kann, wobei die Temperatur der Luft des ersten transversalen Luftvorhangs geschichtet ist.

2. Automatisiertes, gitterbasiertes Lager- und Entnahmesystem (1) nach Anspruch 1, wobei die Temperatur der Luft des ersten transversalen Luftvorhangs in der Abwärtsrichtung des automatisierten, gitterbasierten Lager- und Entnahmesystems (1) abnimmt.

3. Automatisiertes, gitterbasiertes Lager- und Entnahmesystem (1) nach einem der Ansprüche 1-2, wobei die Geschwindigkeit der Luft des ersten transversalen Luftvorhangs in der Abwärtsrichtung des automatisierten, gitterbasierten Lager- und Entnahmesystems (1) zunimmt.

4. Automatisiertes, gitterbasiertes Lager- und Entnahmesystem (1) nach einem der Ansprüche 1-3, wobei in mindestens einem Band des ersten transversalen Luftvorhangs mit geschichteter Lufttemperatur die Geschwindigkeit der Luft in der Transversalrichtung des automatisierten, gitterbasierten Lager- und Entnahmesystems (1) zunimmt.

5. Automatisiertes, gitterbasiertes Lager- und Entnahmesystem (1) nach einem der Ansprüche 1-4, das System (1) ferner umfassend:
- ein zweites Luftabgabevolumen (605), das unterhalb der horizontalen Schienen (110) und oberhalb des ersten Luftabgabevolumens (405) angeordnet ist;
- einen zweiten transversal gerichteten Luftkanal (504), der so angeordnet ist, dass eingehende Luft transversal in das zweite Luftfreisetzungsvolumen (605) verteilt wird,
- eine zweite Luftstromsteuervorrichtung (600), umfassend einen Körper, der mit mehreren Perforationen versehen ist, wobei die Luftstromsteuervorrichtung (600) dazu ausgelegt ist, an einer Öffnung des zweiten transversal gerichteten Luftkanals (504) angeordnet zu sein, die dazu positioniert ist, die Luft transversal in das zweite Luftfreisetzungsvolumen (605) zu verteilen, sodass bei in Position befindlicher zweiter Luftstromsteuervorrichtung der Luftkanal (504) einen zweiten transversalen Luftvorhang stromabwärts der zweiten Luftstromsteuervorrichtung (600) in dem zweiten Luftfreisetzungsvolumen (605) erzeugen kann, wobei die Temperatur der Luft des zweiten transversalen Luftvorhangs einheitlich ist.

6. Automatisiertes, gitterbasiertes Lager- und Entnahmesystem (1) nach Anspruch 5, wobei die Luft des ersten transversalen Luftvorhangs und die Luft des zweiten transversalen Luftvorhangs in die gleiche Richtung strömen.

7. Automatisiertes, gitterbasiertes Lager- und Entnahmesystem (1) nach einem der Ansprüche 5-6, wobei die Temperaturen der Luft des ersten transversalen Luftvorhangs unter 0 °C (273,15 K) liegen und die Temperatur der Luft des zweiten transversalen Luftvorhangs über 0 °C (273,15 K) liegt.

8. Automatisiertes, gitterbasiertes Lager- und Entnahmesystem (1) nach einem der Ansprüche 5-7, wobei mindestens ein Abschnitt einer Zone, die zwischen dem ersten transversalen Luftvorhang und dem zweiten transversalen Luftvorhang angeordnet ist, eine Temperatur von 0 °C (273,15 K) aufweist.

9. Verfahren zum thermischen Verwalten von Luft in einem automatisierten, gitterbasierten Lager- und Entnahmesystem (1), umfassend eine Rahmenstruktur (100) mit sich vertikal erstreckenden Elementen (102) und ein Gitter aus horizontalen Schienen (110), die an oberen Enden der vertikalen Elemente (102) bereitgestellt sind, wobei fernbediente Fahrzeuge (301) zum Handhaben von Warenträgern (106) auf dem Gitter betrieben werden, wobei die Rahmenstruktur (100) definiert:
- ein unterhalb der horizontalen Schienen (110) angeordnetes Lagervolumen (500) zur Lagerung von Warenträgern (106), wobei die Lufttemperatur an den horizontalen Schienen höher ist als die Lufttemperatur im Lagervolumen; und
- ein erstes Luftabgabevolumen (405), das unterhalb der horizontalen Schienen (110) und oberhalb des Speichervolumens (500) angeordnet ist;
das System (1) ferner umfassend einen transversal gerichteten Luftkanal (508), der so angeordnet ist, dass Luft transversal in das erste Luftabgabevolumen (405) verteilt wird, sodass ein erster transversaler Luftvorhang in dem ersten Luftabgabevolumen (405) bereitgestellt wird, das Verfahren umfassend:
- Bereitstellen einer Luftstromsteuervorrichtung (400), umfassend einen Körper (410), der mit mehreren Perforationen (420) an einer Öffnung des transversal gerichteten Luftkanals versehen ist, und
- Schichten Temperatur der Luft des ersten transversalen Luftvorhangs mittels der Luftstromregeleinrichtung (400).

10. Verfahren nach Anspruch 9 zum thermischen Verwalten von Kühlluft in einem automatisierten, gitterbasierten Lager- und Entnahmesystem (1), umfassend eine Rahmenstruktur (100), wobei die Rahmenstruktur (100) definiert:
- ein zweites Luftabgabevolumen (605), das unterhalb der horizontalen Schienen (110) und oberhalb des ersten Luftabgabevolumens (405) angeordnet ist;
- einen zweiten transversal gerichteten Luftkanal (504), der so angeordnet ist, dass Luft transversal in das zweite Luftfreisetzungsvolumen (605) verteilt wird,
das Verfahren umfassend:
- Bereitstellen eines zweiten transversalen Luftvorhangs mit einheitlicher Temperatur in dem zweiten Luftabgabevolumen (605).

## Revendications

1. Système (1) d'entreposage et de prélèvement automatisé basé sur une grille, ledit système (1) comprenant :
- une structure (100) comprenant des éléments s'étendant verticalement (102) et une grille de rails horizontaux (110) placée au niveau d'extrémités supérieures desdits éléments verticaux (102), des véhicules téléguidés (301) de manutention de réceptacles pour marchandises (106) évoluant au-dessus de la grille, la structure (100) définissant :
- un volume d'entreposage (500) disposé sous les rails horizontaux (110) pour entreposer des réceptacles pour marchandises (106), la température de l'air au niveau des rails horizontaux étant supérieure à la température de l'air dans le volume d'entreposage,
- un premier volume de distribution d'air (405) disposé sous les rails horizontaux (110) et au-dessus du volume d'entreposage (400),
- une conduite d'air (508) d'orientation transversale positionnée pour distribuer de l'air transversalement dans le premier volume de distribution d'air (405),
- un dispositif de régulation d'écoulement d'air (400) comprenant un corps (410) pourvu d'une pluralité de perforations (420), ledit dispositif de régulation d'écoulement d'air (400) étant conçu pour être placé au niveau d'un orifice de la conduite d'air (508) d'orientation transversale positionnée pour distribuer l'air transversalement dans le premier volume de distribution d'air (405) de sorte que, lorsque le dispositif de régulation d'écoulement d'air (400) est en place, la conduite d'air (508) puisse produire un premier rideau d'air transversal en aval du dispositif de régulation d'écoulement d'air (400) dans le premier volume de distribution d'air (405), la température de l'air du premier rideau d'air transversal étant stratifiée.

2. Système (1) d'entreposage et de prélèvement automatisé basé sur une grille selon la revendication 1, dans lequel la température de l'air du premier rideau d'air transversal diminue dans la direction allant vers le bas du système (1) d'entreposage et de prélèvement automatisé basé sur une grille.

3. Système (1) d'entreposage et de prélèvement automatisé basé sur une grille selon l'une quelconque des revendications 1 et 2, dans lequel la vitesse de l'air du premier rideau d'air transversal augmente dans la direction allant vers le bas du système (1) d'entreposage et de prélèvement automatisé basé sur une grille.

4. Système (1) d'entreposage et de prélèvement automatisé basé sur une grille selon l'une quelconque des revendications 1 à 3, dans lequel, dans au moins une bande du premier rideau d'air transversal ayant une température d'air stratifiée, la vitesse de l'air augmente dans la direction transversale du système (1) d'entreposage et de prélèvement automatisé basé sur une grille.

5. Système (1) d'entreposage et de prélèvement automatisé basé sur une grille selon l'une quelconque des revendications 1 à 4, ledit système (1) comprenant en outre :
- un second volume de distribution d'air (605) disposé sous les rails horizontaux (110) et au-dessus du premier volume de distribution d'air (405),
- une seconde conduite d'air (504) d'orientation transversale positionnée pour distribuer de l'air entrant transversalement dans le second volume de distribution d'air (605),
- un second dispositif de régulation d'écoulement d'air (600) comprenant un corps pourvu d'une pluralité de perforations, ledit dispositif de régulation d'écoulement d'air (600) étant conçu pour être placé au niveau d'un orifice de la seconde conduite d'air (504) d'orientation transversale positionnée pour distribuer l'air transversalement dans le second volume de distribution d'air (605) de sorte que, lorsque le second dispositif de régulation d'écoulement d'air est en place, la conduite d'air (504) puisse produire un second rideau d'air transversal en aval du second dispositif de régulation d'écoulement d'air (600) dans le second volume de distribution d'air (605), la température de l'air du second rideau d'air transversal étant uniforme.

6. Système (1) d'entreposage et de prélèvement automatisé basé sur une grille selon la revendication 5, dans lequel l'air du premier rideau d'air transversal et l'air du second rideau d'air transversal s'écoulent dans la même direction.

7. Système (1) d'entreposage et de prélèvement automatisé basé sur une grille selon l'une quelconque des revendications 5 et 6, dans lequel les températures de l'air du premier rideau d'air transversal sont inférieures à 0 °C (273,15 K) et la température de l'air du second rideau d'air transversal est supérieure à 0 °C (273,15 K).

8. Système (1) d'entreposage et de prélèvement automatisé basé sur une grille selon l'une quelconque des revendications 5 à 7, dans lequel au moins une section d'une zone positionnée entre le premier rideau d'air transversal et le second rideau d'air transversal a une température de 0 °C (273,15 K).

9. Procédé de gestion thermique de l'air dans un système (1) d'entreposage et de prélèvement automatisé basé sur une grille comprenant une structure (100) avec des éléments s'étendant verticalement (102) et une grille de rails horizontaux (110) placée au niveau d'extrémités supérieures desdits éléments verticaux (102), des véhicules téléguidés (301) de manutention de réceptacles pour marchandises (106) évoluant au-dessus de la grille, la structure (100) définissant :
- un volume d'entreposage (500) disposé sous les rails horizontaux (110) pour entreposer des réceptacles pour marchandises (106), la température de l'air au niveau des rails horizontaux étant supérieure à la température de l'air dans le volume d'entreposage, et
- un premier volume de distribution d'air (405) disposé sous les rails horizontaux (110) et au-dessus du volume d'entreposage (500),
le système (1) comprenant, en outre, une conduite d'air (508) d'orientation transversale positionnée pour distribuer de l'air transversalement dans le premier volume de distribution d'air (405) de sorte qu'un premier rideau d'air transversal soit produit dans le premier volume de distribution d'air (405), ledit procédé comprenant :
- placer un dispositif de régulation d'écoulement d'air (400) comprenant un corps (410) pourvu d'une pluralité de perforations (420) au niveau d'un orifice de ladite conduite d'air d'orientation transversale, et
- stratifier la température de l'air du premier rideau d'air transversal au moyen dudit dispositif de régulation d'écoulement d'air (400).

10. Procédé selon la revendication 9 pour la gestion thermique de l'air de refroidissement dans un système (1) d'entreposage et de prélèvement automatisé basé sur une grille comprenant une structure (100), la structure (100) définissant :
- un second volume de distribution d'air (605) disposé sous les rails horizontaux (110) et au-dessus du premier volume de distribution d'air (405),
- une seconde conduite d'air (504) d'orientation transversale positionnée pour distribuer de l'air transversalement dans le second volume de distribution d'air (605),
ledit procédé comprenant :
- produire un second rideau d'air transversal de température uniforme dans le second volume de distribution d'air (605).
